# EUROPÄISCHE PATENTSCHRIFT

(11) **EP 3 546 673 B1**
(45) Veröffentlichungstag und Bekanntmachung des Hinweises auf die Patenterteilung: **13.10.2021**
(21) Anmeldenummer: 18164347.9
(22) Anmeldetag: 27.03.2018
(51) Int. Cl.: E04F 13/08, E04F 13/23

(54) **FASSADENBEFESTIGUNGSSYSTEM**
FACADE FIXING SYSTEM
SYSTÈME DE FIXATION DE FAÇADE

(43) Veröffentlichungstag der Anmeldung: 02.10.2019
(73) Patentinhaber: SFS intec Holding AG, 9435 Heerbrugg (CH)
(72) Erfinder: PALM, Erich, 9434 Au (CH)

(56) Entgegenhaltungen:
- EP-A1- 2 500 490
- EP-A2- 0 314 120
- WO-A1-2017/077268
- DE-A1-102008 056 970
- US-A1- 2017 204 615

## Beschreibung

Die vorliegende Erfindung befasst sich mit einem System zur Fassadenbefestigung, genauer: einem vorgehängten Fassadensystem, das gegenüber dem Stand der Technik eine einfachere und günstigere Montage erlaubt.

### HINTERGRUND

Als Gebäudehülle wird heute die Gesamtheit aller Bauteile verstanden, die ein Gebäude nach aussen abschliessen. Im modernen Wohn- und Gewerbebau muss diese Gebäudehülle eine Vielzahl von komplexen Funktionen erfüllen, als Barriere gegen Niederschlag, Aussenluft, Umgebungstemperatur, Geräusche und Strahlung. Technisch betrachtet müssen also Aufgaben des mechanischen Schutzes, der thermischen und akustischen Isolation sowie eines ansprechenden Designs gleichzeitig gelöst werden.

Einer vorgehängten Fassade kommt hierbei die Aufgabe zu, als äusserer Abschluss der Gebäudehülle die funktionellen Schichten und die Rohbauoberfläche zu überdecken und vor Umgebungseinflüssen zu schützen. Die Montage der Fassadenelemente muss dabei einfach und sicher sein, die Verankerung Druck- und Windsogkräften Stand halten können und ästhetische Ansprüche der Architektur erfüllen.

### STAND DER TECHNIK

Um all die vorgenannten Vorgaben abzudecken, sind im Stand der Technik eine Vielzahl von Lösungen beschrieben worden. Üblicherweise wird bei diesen zwischen einer Unterkonstruktion und der äusseren Fassadenhülle unterschieden. Die Unterkonstruktion ist dabei in der Regel ein aus Metallprofilen erstelltes Raster, das in einem vorgegebenen Abstand zur darunterliegenden Rohbauhülle realisiert wird. An diesem Raster werden die von aussen sichtbaren Fassadenplattenelemente befestigt, die in der Gesamtheit somit die Fassadenhülle bilden.

Die Anforderungen an eine solche Kombination aus Unterkonstruktion und Fassadenhülle sind hoch. Die Montage soll mit wenig Werkzeugen und Elemente auskommen, flexibel anwendbar sein (Gebäudeform, verschiedene Untergründe der Rohbauhülle) und schnell und günstig zu realisieren sein.

Eine montierte Fassade muss in der Lage sein, mechanische Spannungen aufzunehmen oder abzuleiten, die durch temperaturwechselbedingt unterschiedliche Ausdehnungen von Fassadenhülle und Unterkonstruktion entstehen. Dies bedingt, dass zwischen Unterkonstruktion und Fassadenhülle entweder elastische Elemente zur Aufnahme der Zug/Druckspannungen vorgesehen werden oder eine Kombination aus Festpunkten und Gleitpunkten ein Spiel zwischen der Unterkonstruktion und der Fassadenhülle erlaubt.

Eine weitere Forderung ist häufig, dass die Fassadenhülle "unsichtbar" befestigt werden kann, dass also die mechanischen Verbindungspunkte zwischen Fassadenelementen und Unterkonstruktion nicht in äussere Erscheinung treten.

Es ist bekannter Stand der Technik, Fassadenplattenelemente mittels Schrauben, Nieten oder Einhängevorrichtungen mechanisch dauerhaft zu befestigen. Je nach Grösse, Beschaffenheit und Gewicht solcher Fassadenplattenelemente sind allerdings eine Vielzahl von Haltepunkten vorzusehen, worauf die Auslegung der Unterkonstruktion Rücksicht nehmen muss.

So zeigt die EP 0 314 120 A2 eine Fassadenkonstruktion für Hochbauten, die in die Rückseite von Fassadenplatten eingebettete Verankerungsbolzen vorsieht. Diese wiederum werden so an einer Unterkonstruktion befestigt dass die Verankerung unsichtbar bleibt und das Fassadenbild nicht stört. Dieses Dokument schlägt vor, zwischen Unterkonstruktion und Fassadenplatte zusätzlich Schwingmetallkörper vorzusehen, die einerseits die Verankerungsbolzen aufnehmen und andererseits an der Unterkonstruktion befestigt werden. So muss die Fassadenplatte nur ein Minimum von Kräften und Momenten aufnehmen.

Besonders attraktiv erscheinen ferner Klebeverbindungen zwischen Unterkonstruktion und den Fassadenelementen, weil dadurch Bohrvorgänge an der Unterkonstruktion bei der Montage vermieden werden. Zudem erfolgt die Ableitung der Last der Fassadenplattenelemente flächig auf die Unterkonstruktion und nicht punktuell. Durch die Notwendigkeit, einen Klebstoff aushärten bzw. abbinden zu lassen ist es zudem möglich, nach dem Anbringen der Fassadenplatten an der Unterkonstruktion die Endlage der Elemente in gewissen Grenzen einzustellen. Ein Vorteil der Verklebung liegt darin, dass jede Fassadenplatte grossflächig mit der Unterkonstruktion verbunden ist und somit ein Schwingen oder Klappern der Fassadenplatten unter wechselnder Windlast wesentlich seltener auftritt.

Allerdings müssen moderne Klebstoffe, insbesondere wenn sie die geforderte Endfestigkeit langfristig behalten sollen, unter genau kontrollierten Bedingungen verarbeitet werden. Vorbehandlungen wie Reinigen (Entfetten) sowie Grundieren (Haftungsvermittler) der Unterkonstruktion sind aufwändig und, wenn Lösemittel involviert sind, problematisch in der Handhabung, Beschaffung und Entsorgung. Verarbeitungstemperaturen unter +5°C sowie über +35°C sind in der Regel zu vermeiden; Taubildung an der Unterkonstruktion sowie Nässe durch Regen lassen häufig eine Montage nicht zu. Zudem kann es vorkommen, dass solche kontrollierten Bedingungen über mehrere Stunden erfüllt sein müssen. Daher wird es häufig notwendig, bis zum Erreichen der Endfestigkeit eine temporäre oder dauerhafte mechanische Sicherung vorzusehen oder eine zusätzliche Schnellklebung.

Bekannt ist beispielsweise, ein doppelseitiges Klebeband auf der Unterkonstruktion aufzubringen und daneben einen langsamer härtenden Ein- oder Mehrkomponentenkleber. Das Klebeband verwendet häufig als Trägermaterial einen Schaumstoff, was Unebenheiten des Untergrundes auszugleichen hilft, als elastisches Ausgleichsmaterial fungieren kann und einen Spalt definiert zwischen Unterkonstruktion und Fassadenplattenelement für den langsamer härtenden Ein- oder Mehrkomponentenkleber. Für Beispiele von Markt erhältlichen Systemen sei auf Produkte der Firmen Eternit und Swisspor verwiesen.

Als temporäre mechanische Sicherung können Klemmen oder Klammern eingesetzt werden, die auch dafür sorgen, dass u.U. geforderte Anpresskräfte während der Abbinde-/Trocknungsphase eingehalten werden. Alternativ können Halterungen oder andere Befestigungselemente vorgesehen werden, die eine Absturzsicherung während der Abbindephase leisten können und danach verbleiben. Diese im Stand der Technik verwendeten temporären mechanischen Sicherungen sind so einfach wie möglich ausgeführt, da sie nur wenige Stunden ihre Sicherungsfunktion erfüllen müssen. Häufig werden sie als dünne Blechbauteile ausgeführt, die auf der Rückseite der Fassadenplatten flächig bei der Herstellung angebracht (aufgeklebt) werden und ein Verschrauben bzw. Vernieten mit der Unterkonstruktion zulassen. Dabei kann es durchaus gewollt sein, dass nach der Endmontage der Fassadenplatten mittels Ein/Mehrkomponentenkleber die Klebestelle irgendwann aufbricht - die mechanisch feste Verbindung ist als Festpunkt ungeeignet, Spannungen auszugleichen.

Eine Kombination einer Klebeverbindung und einer mechanischen Sicherung erscheint vor diesem Hintergrund als Kombination von Nachteilen zweier Systeme, bei der Montage, der Herstellung und dem Vorhalten von Befestigungsmitteln auf der Baustelle.

Die Erfindung hat daher die Aufgabe eine Befestigungsanordnung zu beschreiben, die dieses Vorurteil überwindet; dessen Haltekonzept also als Hybridsystem ausgelegt ist mit einer Klebekomponente sowie einer mechanischen Komponente, welche einfach zu montieren und zu justieren ist. Dies wird durch die Kombination der Merkmale des unabhängigen Anspruchs eins gelöst. Ein Verfahren, welches zu einer erfindungsgemässen Befestigungsanordnung führt, ist ab Anspruch 8 beschrieben.

### BESCHREIBUNG DER ERFINDUNG

Unter "Fassadenelemente" bzw. Fassadenplatten werden im Folgenden Bauteile verstanden, die als Teil einer Gebäudehülle an einer Unterkonstruktion befestigt werden sollen. Diese Fassadenelemente sind üblicherweise grossflächig, plan und haben eine quadratische oder rechteckige Grundform. Sie werden häufig aus Metall gefertigt, Faserzement, Kunststoffen, Naturstein oder Verbundmaterialien. Sie dienen dem Schutz, der Isolation, der Verschalung und/oder der Dekoration des Gebäudes.

Als "Unterkonstruktion" wird die Gesamtheit der mechanischen Bauteile verstanden, die ein Gerüst, ein Raster, eine mechanische Konstruktion bilden bzw. bilden können zur dauerhaften Halterung von Fassadenplattenelementen. Die Unterkonstruktion wird an der äusseren Rohbauhülle eines Gebäudes verankert. Rohbauhülle kann auch eine vorhandene, frühere Fassadenoberfläche sein.

Als "unsichtbar" wird in dem Zusammenhang eine Befestigung beschrieben, bei der die Fassadenplattenelemente an ihrer nach aussen sichtbaren Oberfläche keine Elemente zeigen, die mit der Befestigung der Fassadenplattenelemente zu tun haben.

Mit "Lasche" im Sinne der vorliegenden Erfindung ist ein im Wesentlichen flächiges Materialstück mit mindestens zwei Durchgangslöchern gemeint, mit dem zwei Bauteile mittels Schrauben, Schrauben und Muttern, Niete bzw. Blindniete verbunden werden können.

Eine Befestigungsanordnung gemäss der vorliegenden Erfindung dient zur Verankerung von Fassadenplattenelementen. Es umfasst eine Unterkonstruktion an einer Rohbauhülle und eine Mehrzahl von Fassadenplattenelementen bzw. Fassadenelementen 25, wobei die Befestigung zwischen der Unterkonstruktion und den Fassadenplattenelementen eine Klebekomponente umfasst sowie eine mechanische Sicherungskomponente. Daher rührt auch die Bezeichnung Hybridsystem.

Erfinderisch zeichnet sich die Befestigungsanordnung dadurch aus, dass als mechanische Sicherungskomponente pro Fassadenplattenelement mindestens zwei Sicherungslaschen 40, 42 vorgesehen sind, die jeweils mindestens zwei Befestigungspunkte (z.B. 50, 52, 30, 32, 32') aufweisen. Einer der mindestens zwei Befestigungspunkte wird die Verbindung zwischen Lasche und Fassadenplattenelement und der andere bzw. weitere Befestigungspunkt wird die Verbindung zwischen Lasche und Unterkonstruktion herstellen. Es können mehr als diese zwei Verbindungspunkte pro Lasche vorgesehen sein und dennoch die Funktion gemäss vorliegender Erfindung erfüllen.

Mindestens ein Befestigungspunkt der ersten (40) der beiden Sicherungslaschen 40, 42 weist einen Gleitpunkt 50 auf, der ein Langloch 41 der Lasche nutzt. Ein Befestigungspunkt im Rahmen dieser Erfindung umfasst ein Verbindungselement (z.B. eine Schraub-Mutter-Kombination, einen Bolzen, einen Spreizniet), welches das mechanische Bindeglied zwischen Lasche und Fassadenplatte bzw. Lasche und Unterkonstruktion bildet. Das Verbindungselement des ersten Befestigungspunktes kann durch eine Durchbohrung in der Sicherungslasche geführt und in der Fassadenplatte eingeklebt, eingeschraubt, verspreizt, verklemmt oder vernietet werden. Die Durchbohrung in der Lasche kann als Langloch oder kreisrunde Durchbohrung ausgeführt sein. Das Verbindungselement des zweiten Befestigungspunkt kann eine Bohrschraube, ein Blindniet oder ein vergleichbares Element sein, das mit einem entsprechenden Setzgerät verarbeitet wird.

Ein Gleitpunkt liegt dann vor, wenn sich Lasche und Fassadenplattenelement bzw. Unterkonstruktion am Befestigungspunkt relativ zueinander bewegen können. Wenn ein Befestigungspunkt nur eine Drehung zulässt, ist er kein Gleitpunkt, sondern ein Drehpunkt. Ein Gleitpunkt hat jedoch immer auch die Funktion eines Drehpunkts. Ein Gleitpunkt bietet somit eine lose Verbindung, bei der jedoch Lasche und Fassadenplattenelement bzw. Unterkonstruktion durch das Verbindungselement unverlierbar verbunden sind. Um als Gleitpunkt wirken zu können, muss daher mindestens die Lasche, das Fassadenelement bzw. die Unterkonstruktion ein Langloch aufweisen, das eine Relativbewegung zueinander erlaubt. Am technisch einfachsten und sinnvollsten ist das Langloch in der Lasche zu realisieren. Das Verbindungselement wiederum muss so ausgelegt bzw. gesetzt sein, dass es die geforderte Relativbewegung zulässt, z.B. durch eine Schraube mit aufgeschobener Distanzhülse. Ein Festpunkt stellt somit einen Befestigungspunkt dar, der Lasche und Fassadenplattenelement bzw. Unterkonstruktion unverrückbar festhält.

Ferner wichtig für die Erfindung ist, dass bei einer montierten Befestigungsanordnung mit einer Lasche mit Gleitpunkt das Langloch nicht rein vertikal bzw. rein horizontal verläuft. Hierzu betrachtet man eine Achse A, die durch die Längsausdehnung des Langlochs in der Ebene der Lasche definiert wird. Diese Achse A ist gemäss Erfindung im verbauten Zustand der Lasche gegen die Senkrechte um einen Winkel γ verkippt. Für γ wird ein Wert zwischen 5° und 20°, bevorzugt 5° bis 10° verwendet. Die Bezugs- bzw. Vertikalachse V, die als Referenz dient, lässt sich durch ein Lot ermitteln.

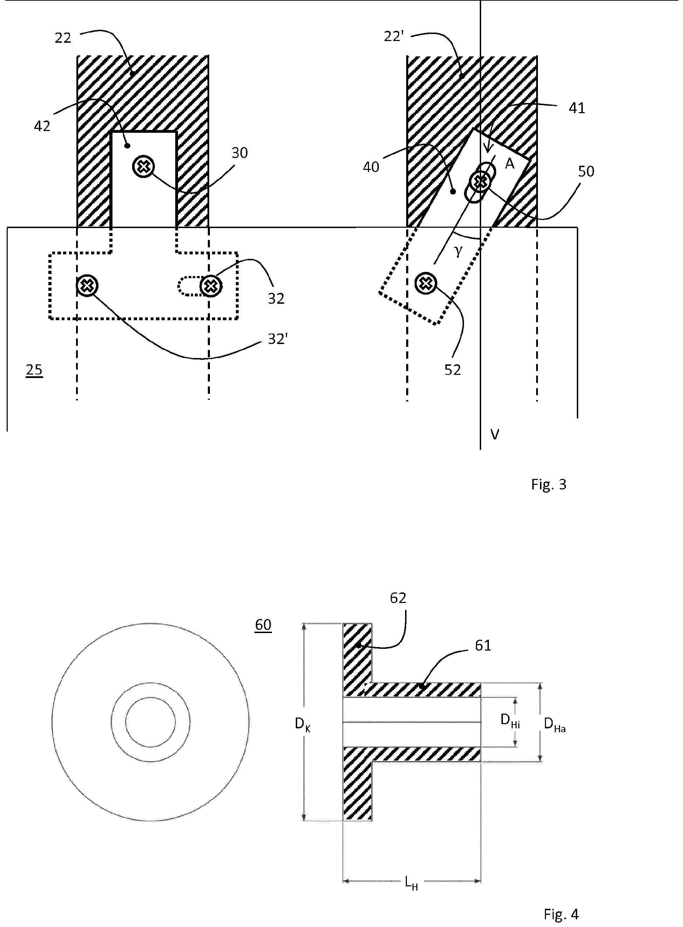

Diese Verkippung lässt sich bevorzugt erreichen, indem eine Lasche, deren Längsausdehnung parallel zur Achse A eines ihrer Langlöcher verläuft, schräg verbaut wird, eben um den Winkel γ verkippt, wie in Figur 3 gezeigt. Alternativ kann eine Lasche verwendet werden, die senkrecht verbaut werden kann, deren Langloch jedoch eine verkippte Anordnung relativ zur Längsausdehnung der Lasche aufweist.

Dieser Kippwinkel bewirkt, dass der Gleitpunkt sowohl horizontale wie auch vertikale Abmessungsänderungen von Fassadenplattenelement 25 und Unterkonstruktion 22, 22' aufnehmen kann und so Spannungen in der Fassadenkonstruktion vermeiden hilft. Gleichzeitig wird die Wirkung der Laschen nicht behindert, die als Sicherung dienen, falls die Klebung versagt. Dabei spielt es dann keine Rolle, dass der Gleitpunkt die Fassadenplatte dann nicht am ursprünglichen Platz halten kann, ein Durchrutschen ist je nach Montageart möglich. Da es sich aber um eine Notfallsicherung handelt, ist das unbedenklich.

Ein kurzes Stahlseil mit Ösen an beiden Enden könnte als technisches Äquivalent für eine Sicherungslasche dienen, wobei das Stahlseil die Gleitpunkteigenschaften gewährleistet, auch wenn die beiden Ösen als Festpunkte verankert werden. Diese Variante ist jedoch nicht Teil der vorliegenden Erfindung.

In einer Weiterbildung der Erfindung kann in einer Befestigungsanordnung eine Sicherungslasche 40, 42 als flächiges, im Wesentlichen T- (12), Doppel-T (12"), L- (12') oder I-förmiges (11, 11') Laschenelement ausgebildet sein. "Flächig" sei dabei nicht als Festlegung auf ein ausschliesslich planes Bauteil gemeint. Es ist durchaus möglich, dass ein Laschenelement in die Fläche eingearbeitete Aussteifungen aufweist wie Sicken oder Abkantungen oder Wölbungen.

Die beschriebenen unterschiedlichen Typen von Laschenelementen können zusammen (nebeneinander) verwendet werden, wo dies technisch sinnvoll erscheint. Rationell und bevorzugt ist, wenn die erste und die zweite Sicherungslasche 40, 42 vom gleichen Typ eines Laschenelements sind. Die Laschenelemente sind bevorzugt aus Stahl, aus Aluminium oder einem hochfestem Kunststoff, insbesondere faserverstärktem Kunststoff.

Wie eingangs erwähnt, ist die vorliegende Erfindung ein Hybridsystem aus einer mechanischen Sicherungskomponente und einer Klebekomponente. Als Klebekomponente kommt hierbei mindestens eines oder eine Kombination der folgenden Elemente in Frage: Ein- oder Mehrkomponentenkleber, doppelseitiges Klebeband, doppelseitiges Schaumstoffklebeband, doppelseitige Klebepunkte oder -streifen.

Die Unterkonstruktion wird, wie bei bekannten Klebefassadensystemen, bevorzugt von vertikal angeordneten Profilen gebildet, die in bekannter Art als L, U oder Flachprofile aus Metall gefertigt sein können. Die Anordnung vertikal hat Vorteile in Bezug auf die zur Verfügung stehende Klebefläche wie auch für hier vorgestellte Verwendung der Sicherungslaschen.

Der Aufbau einer Befestigungsanordnung gemäss Erfindung lässt sich als eine Folge von Verfahrensschritten beschreiben. Ein Verfahren zur Befestigung von Fassadenplattenelementen 25 an einer Unterkonstruktion 22, 22' würde im mindesten die folgenden Schritte umfassen:
a) Bereitstellen einer Unterkonstruktion 22, 22'
b) Bereitstellen mindestens eines Fassadenplattenelementes 25
c) Vorbereiten der Unterkonstruktion 22, 22' und des Fassadenplattenelements für die Befestigung
d) Anbringen von mindestens zwei Sicherungslaschen an dem Fassadenelement 25. Das Anbringen umfasst bevorzugt ein Ankleben, Verschrauben, Vernieten oder Anklemmen der Sicherungslaschen.
e) Auftragen mindestens einer Klebstoffkomponente auf das Fassadenelement 25 oder die Unterkonstruktion 22, 22'. Das kann, je nach Einsatzfall ein Auftragen eines Ein- oder Mehrkomponentenklebers sein, das Anbringen eines doppelseitigen Klebebandes bzw. doppelseitigen Schaumstoffklebebands, von doppelseitigen Klebepunkten oder -streifen.
f) Ausrichten und Anbringen des Fassadenelements an der Unterkonstruktion 20, 22'. Die umfasst insbesondere:
   - Das Positionieren des Fassadenplattenelements horizontal und vertikal gemäss einem Verlegeplan
   - Das In-Kontakt-Bringen der zu verklebenden Flächen bzw. aufgetragenen Klebstoffkomponenten
   - Bei Bedarf ein Feinjustieren der Ausrichtung des Fassadenplattenelements 25
   - Bedarfsweises das Anbringen von Klemmen, Zwingen oder Klammern zur Sicherung des ausgerichteten Festplattenelementes 25
g) Befestigen der beiden Sicherungslaschen an der Unterkonstruktion, wobei ein Befestigungspunkt der ersten 40 der beiden Sicherungslaschen 40, 42 ein Gleitpunkt 50 ist.

Dieser Gleitpunkt nutzt ein Langloch 41, dessen Längsausdehnung eine Achse (A) definiert, die nach Befestigung des Gleitpunktes um einen Winkel γ zwischen 5° und 20° gegenüber der Vertikalachse (V) verkippt ist. Das Befestigen umfasst insbesondere ein Verschrauben bzw. Vernieten.

Mit dem im Schritt c) beschriebenen "Vorbereiten" sind insbesondere gemeint:
- Prüfen und bei Bedarf Reinigen von zumindest Teiloberflächen der Unterkonstruktion 22, 22' und / oder des Fassadenplattenelements 25. Vom Aufbau der Unterkonstruktion, von Bohr- und Schraubarbeiten ist die Unterkonstruktion in der Regel verschmutzt. In den für die Verklebung vorgesehenen Bereichen (Teiloberflächen) kann daher eine Reinigung mit mechanischen (anrauen) oder chemischen Mitteln (Lösemitteln) angezeigt sein.
- Bei Bedarf Auftragen eines Haftvermittlers / Primer. Bestimmte Klebstoffe erfordern die Verwendung eines Haftvermittlers, der auf die (vorgereinigte) für die Verklebung vorgesehene Fläche aufzutragen ist.

Die Schritte c) und d) oben müssen nicht zwingend in der oben beschriebenen Reihenfolge ausgeführt werden. Es kann Sinn machen, die Fassadenplattenelemente bereits mit Sicherungslaschen ausgestattet zum Montageort zu liefern. Es kann sein, dass der Vorbereitungsschritt c) parallel zu einer Montage anderer Fassadenplattenelemente erfolgt. Daher gilt im Grundsatz, dass die Beschreibung und Reihenfolge in den Ansprüchen nicht auf eine streng chronologische Reihenfolge eingeschränkt verstanden werden muss. Als Verfahrensvariante soll gelten, wenn die Schritte bzw. Teilschritte von c) und d) in geänderter Reihenfolge ausgeführt werden.

Zur Erleichterung der Montage kann vor der Befestigung eines weiteren Fassadenplattenelements gemäss den Schritten a) bis g) ein Anbringen von ein oder mehreren Distanzlehren 60 vorgenommen werden, welche das Ausrichten und Anbringen des weiteren Fassadenplattenelements 25 unterstützen. Ein solches Distanzelement kann als einfacher Distanzklotz mit vorgegebener Höhe eingesetzt werden. Nach Montage eines Fassadenplattenelementes werden die Distanzelemente aufgelegt oder aufgesteckt und erlauben, das nächste Distanzelement aufzusetzen. Dadurch kann eine einfachere und genauere Positionierung des Fassadenplattenelements gewährleistet werden. Nach Aushärten der Klebeverbindung werden die Distanzlehren wieder entfernt und können erneut verwendet werden.

### BESCHREIBUNG DER FIGUREN

Figur 1 zeigt eine Zusammenstellung (nicht abschliessend) möglicher Laschenelemente
Figur 2 zeigt eine Befestigungsanordnung mit Gleitpunkt(en), aber nicht erfindungsgemäss
Figur 3 zeigt eine Befestigungsanordnung gemäss der Erfindung
Figur 4 zeigt eine mögliche Ausführung eines Distanzelementes
Figur 5 zeigt eine rückseitige Ansicht einer Prinzipzusammenstellung für eine Befestigungsanordnung.

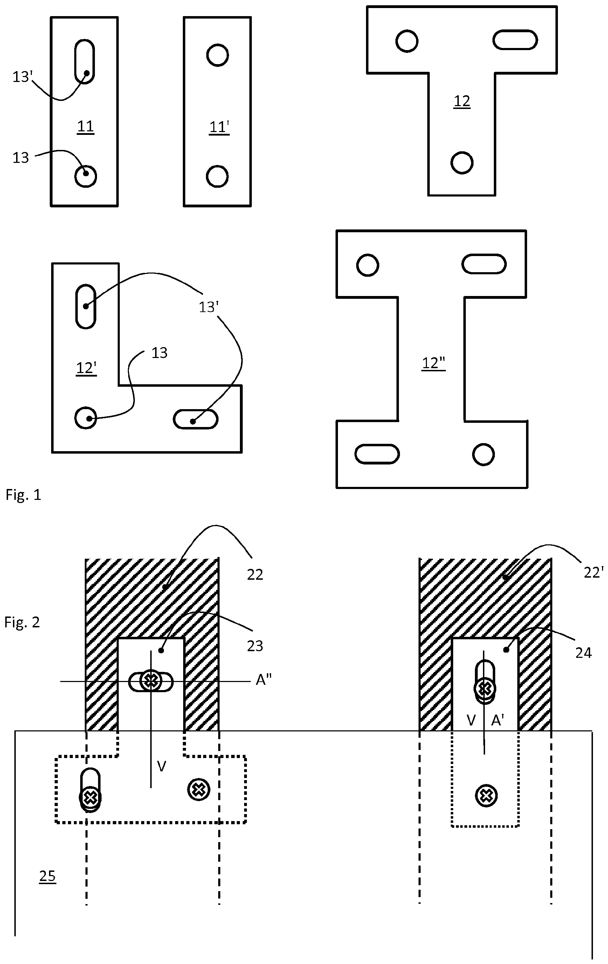

Figur 1 zeigt verschiedene Ausführungsformen von Sicherungslaschen, wie sie in einer Befestigungsanordnung gemäss der Erfindung Verwendung finden können. Mit Referenzzeichen 11, 11' sind zwei einfache, I-förmige Laschen mit zwei Durchbohrungen 13, 13' gezeigt, wobei bei 11 eine Durchbohrung als Langloch 13' ausgeführt ist. Die Ausführung 11' lässt wegen der beiden kreisrunden Durchbohrungen keinen Gleitpunkt zu. Die Ausführung 11 lässt im Langloch 13' einen Gleitpunkt zu, sofern das Verbindungselement (Schraube, Niet, ..) eine lose Verbindung zulässt. Eine Schraubverbindung durch ein Langloch z.B. kann ein Festpunkt sein, wenn die Schraube im Langloch 13' die Lasche 11 so starr verbindet, dass eine Relativbewegung ausgeschlossen ist. Referenzzeichen 12 zeigt eine T-förmige Lasche, Referenz 12' ein L-förmiges Laschenelement mit 2 Langlöchern 13'. Das Doppel-T förmige Laschenelement 12" weist zwei Langlöcher auf. Die Ausstattung mit Langlöchern wird ein Fachmann je nach Typ Fassadenplatte und Unterkonstruktion auswählen bzw. anpassen. Die gezeigten Varianten sind keine abschliessende Auswahl sondern nur exemplarische Darstellungen. Technisch mögliche Details wie Sicken oder Verstärkungsprägungen sind nicht dargestellt.

Figur 2 zeigt eine Befestigungsanordnung mit 2 Laschen 23, 24 gemäss Stand der Technik. Sie sind hier aufgeführt, um die Erfindung besser abgrenzen zu können. Die Unterkonstruktion ist wiederum mit 22, 22' bezeichnet und ist als vertikales Profil gezeigt, an der ein Fassadenplattenelement 25 befestigt wurde. Zwei Laschen 23, 24 verschiedener Form sind verwendet, um die Befestigungsanordnung zu vervollständigen. Bei der Lasche 23 ist oben ein Langloch mit horizontaler Ausrichtung gezeigt, die Orientierungsachse ist mit A" bezeichnet. Analog findet sich bei der Lasche 24 ein vertikal orientiertes Langloch, dessen Orientierungsachse als A' gekennzeichnet ist. Die in Figur 2 gezeigte Befestigungsanordnung enthält zwar Langlöcher in verschiedener Orientierung und sie können, je nach verwendetem Verbindungselement, einen Gleitpunkt oder einen Festpunkt darstellen. Das Fehlen des Merkmals "Achse A verkippt um einen Winkel γ zur Vertikalen" bedeute, dass die Befestigungsanordnung von Figur 2 jedoch keine Ausführungsform gemäss Erfindung ist. Bei der Lasche 23 nehmen die Orientierung von Achse A" und der Vertikalen V einen 90° Winkel ein. Bei der Lasche 24 ist der Winkel zwischen V und A' essentiell 0.

Im Kontrast dazu stellt die Befestigungsanordnung nach Figur 3 eine Ausführungsform gemäss Erfindung dar. Die linke Seite von Figur 3 ist grundsätzlich mit der von Figur 2 vergleichbar. Die Lasche 42 weist einen Befestigungspunkt 30 mit dem Profil 22 einer Unterkonstruktion auf. Da die Lasche dort kein Langloch aufweist, handelt es sich um einen Festpunkt bzw. einen Drehpunkt, aber keinen Gleitpunkt. Die Verbindung zwischen Sicherungslasche 42 und dem Fassadenplattenelement 25 weist zwei Befestigungspunkte 32, 32' auf. Befestigungspunkt 32' ist ein Festpunkt; Befestigungspunkt 32 weist zwar ein Langloch auf, seine horizontale Orientierung weist es aber nicht als Gleitpunkt im Sinne der Erfindung auf.

Anders ist dies bei der Sicherungslasche 40, die ebenfalls ein Profil 22' der Unterkonstruktion mit dem Fassadenplattenelement 25 verbindet. Diese Lasche 40 weist ein Langloch 41 auf, dessen Orientierung, markiert durch die Achse A in Figur 3, gegenüber der Vertikalen V um einen Winkel γ verkippt ist. Erfindungsgemäss ist der Befestigungspunkt 50 ein Gleitpunkt, diese Verbindung ist also in der Lage thermische Ausdehnungen der Unterkonstruktion bzw. der Fassadenplatte auszugleichen. Der zweite Befestigungspunkt 52 der Sicherungslasche 22' ist bevorzugt als Festpunkt ausgeführt.

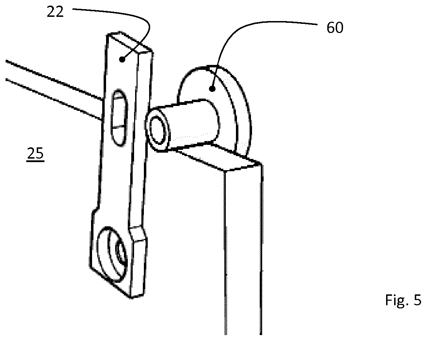

Figur 4 zeigt eine Distanzlehre oder Hülse 60, welche zur Montage von Fassadenplattenelementen 25 verwendet werden kann. Sie weist bevorzugt im Querschnitt eine T-Form bzw. Pilzform mit flachem Kopf 62 auf. Eine rohrförmige Hülse 61 weist einen Aussendurchmesser D_{HA} auf, er definiert bei der Montage den Sollabstand zwischen zwei Fassadenplattenelementen 25. Der Kopf 62 oder Flansch an der Hülse 61 mit Durchmesser D_{K} dient als Anschlag, Details dazu siehe Figur 5. Die Hülse kann als massiver Stab oder rohrförmig mit einem freien Innendurchmesser DHI ausgeführt werden. Neben der Materialersparnis kann die Öffnung auch als Angriffspunkt für Setzgerät oder einen Hilfsgriff zum Entfernen der Distanzlehre 60 nach der Montage dienen.

Figur 5 zeigt eine Montagesituation von der Gebäudeseite mit Blick auf die Rückseite eines Fassadenelements 25. Eine Lasche 22 (ohne Verbindungselemente) liegt verdeckt an der Rückseite des Fassadenelementes und eine Distanzlehre 60 markiert den Sollabstand zum nächsten zu montierenden Fassadenelement.

### BEZUGSZEICHENLISTE

- 11, 11': Laschenelement, Sicherungslasche I-förmig
- 12: Laschenelement, Sicherungslasche T-förmig
- 12': Laschenelement, Sicherungslasche L-förmig
- 12": Laschenelement, Sicherungslasche Doppel-T-förmig
- 13, 13': Durchbohrung(en)
- 20: Befestigungsanordnung, Haltesystem
- 22, 22': Unterkonstruktion
- 25: Fassadenplattenelementen, Fassadenelement
- 30, 32, 32': Befestigungspunkte
- 41: Langloch
- 40, 42: Sicherungslasche(n)
- 50: Befestigungspunkt Langloch
- 52: Befestigungspunkt
- 60: Distanzlehre
- 61: Hülse
- 62: Kopf

## Patentansprüche

1. Eine Befestigungsanordnung (20) zur Verankerung von Fassadenplattenelementen (25) umfasst eine Unterkonstruktion (22, 22') an einer Rohbauhülle und eine Mehrzahl von Fassadenplattenelementen (25), wobei die Befestigung zwischen der Unterkonstruktion (22, 22') und den Fassadenplattenelementen (25) eine Klebekomponente umfasst sowie eine mechanische Sicherungskomponente,
**dadurch gekennzeichnet, dass**
• als mechanische Sicherungskomponente pro Fassadenplattenelement (25) mindestens zwei Sicherungslaschen (40, 42) vorhanden sind mit je mindestens zwei Befestigungspunkten (50, 52, 30, 32, 32')
• wobei mindestens ein Befestigungspunkt der ersten (40) der beiden Sicherungslaschen (40, 42) ein Gleitpunkt (50) ist, der ein Langloch (41) nutzt, und
• wobei die Längsausdehnung des Langlochs eine Achse (A) definiert, die um einen Winkel γ zwischen 5° und 20° gegenüber der Vertikalachse (V) verkippt ist.

2. Eine Befestigungsanordnung (20) nach Anspruch 1, **dadurch gekennzeichnet, dass** eine Sicherungslasche (40, 42) als flächiges, im Wesentlichen T- (12), Doppel-T (12"), L- (12') oder I-förmiges (11, 11') Laschenelement ausgebildet ist.

3. Eine Befestigungsanordnung (20) nach Ansprüchen 1-2, **dadurch gekennzeichnet, dass** die erste und die zweite Sicherungslasche (40, 42) vom gleichen Typ eines Laschenelements sind.

4. Eine Befestigungsanordnung (20) nach Ansprüchen 1-3, **dadurch gekennzeichnet, dass** die Laschen aus Stahl geformt sind, aus Aluminium oder einem hochfestem Kunststoff, insbesondere faserverstärktem Kunststoff.

5. Eine Befestigungsanordnung (20) nach Ansprüchen 1 - 4, **dadurch gekennzeichnet, dass** die Klebekomponente mindestens eines oder eine Kombination der folgenden Elemente umfasst: Ein- oder Mehrkomponentenkleber, doppelseitiges Klebeband, doppelseitiges Schaumstoffklebeband, doppelseitige Klebepunkte oder -streifen.

6. Eine Befestigungsanordnung (20) nach Ansprüchen 1 - 5, **dadurch gekennzeichnet, dass** die Unterkonstruktion (22, 22') vertikal angeordnete Profile umfasst.

7. Eine Befestigungsanordnung (20) nach Anspruch 6, **dadurch gekennzeichnet, dass** die Profile als L, U oder Flachprofile aus Metall ausgeführt sind.

8. Verfahren zur Befestigung von Fassadenplattenelementen (25) an einer Unterkonstruktion (22, 22') mit folgenden Schritten:
a) Bereitstellen einer Unterkonstruktion (22, 22')
b) Bereitstellen mindestens eines Fassadenplattenelementes (25)
c) Vorbereiten der Unterkonstruktion (22, 22') und des Fassadenplattenelements für die Befestigung
d) Anbringen von mindestens zwei Sicherungslaschen an dem Fassadenelement (25)
e) Auftragen mindestens einer Klebstoffkomponente auf das Fassadenelement (25) oder die Unterkonstruktion (22, 22')
f) Ausrichten und Anbringen des Fassadenelements an der Unterkonstruktion (20, 22')
g) Befestigen der beiden Sicherungslaschen an der Unterkonstruktion, wobei ein Befestigungspunkt der ersten (40) der beiden Sicherungslaschen (40, 42) ein Gleitpunkt (50) ist, der ein Langloch (41) nutzt dessen Längsausdehnung eine Achse (A) definiert, die nach Befestigung des Gleitpunktes um einen Winkel γ zwischen 5° und 20° gegenüber der Vertikalachse (V) verkippt ist

9. Verfahren nach Anspruch 8, **dadurch gekennzeichnet, dass** der Schritt c) umfasst:
- Prüfen und bei Bedarf Reinigen von zumindest Teiloberflächen der Unterkonstruktion (22, 22') und / oder des Fassadenplattenelements (25)
- Bei Bedarf Auftragen eines Haftvermittlers / Primer

10. Verfahren nach Ansprüchen 8-9, **dadurch gekennzeichnet, dass** das Anbringen in Schritt d) ein Ankleben, Verschrauben, Vernieten, Anklemmen der Sicherungslaschen umfasst.

11. Verfahren nach Ansprüchen 8-10, **dadurch gekennzeichnet, dass** das Auftragen einer Klebstoffkomponente in Schritt e) mindestens einen der folgenden Schritte umfasst: Auftragen eines Ein- oder Mehrkomponentenklebers, Anbringen eines doppelseitigen Klebebandes, Anbringen eines doppelseitigen Schaumstoffklebebands, von doppelseitigen Klebepunkten oder -streifen.

12. Verfahren nach Ansprüchen 8-11, **dadurch gekennzeichnet, dass** die Schritte bzw. Teilschritte von c) und d) in geänderter Reihenfolge ausgeführt werden.

13. Verfahren nach Ansprüchen 8-12, **dadurch gekennzeichnet, dass** das Befestigen in Schritt g) ein Verschrauben bzw. Vernieten umfasst.

14. Verfahren nach Ansprüchen 8-13, **dadurch gekennzeichnet, dass** das Ausrichten und Anbringen des Fassadenelements (25) nach Schritt f) umfasst:
- Positionieren des Fassadenplattenelements horizontal und vertikal gemäss einem Verlegeplan
- In-Kontakt-Bringen der zu verklebenden Flächen bzw. aufgetragenen Klebstoffkomponenten
- Bei Bedarf Feinjustieren der Ausrichtung des Fassadenplattenelements (25)
- Bedarfsweises Anbringen von Klemmen, Zwingen oder Klammern zur Sicherung des ausgerichteten Festplattenelementes (25)

15. Verfahren nach Ansprüchen 8-14, **dadurch gekennzeichnet, dass** vor der Befestigung eines weiteren Fassadenplattenelements gemäss den Schritten a) bis g) ein Anbringen von ein oder mehreren Distanzlehren (60) vorgenommen wird, welche das Ausrichten und Anbringen des weiteren Fassadenplattenelements (25) unterstützen.

## Claims

1. A fastening arrangement (20) for anchoring facade panel elements (25), comprising a substructure (22, 22') on a building shell and a plurality of facade panel elements (25), wherein the fastening arrangement comprises an adhesive component and a mechanical securing component located between the substructure (22, 22') and the facade panel elements (25), **characterized in that**
• as a mechanical securing component, at least two securing straps (40, 42) are provided for each facade panel element (25), each having at least two fastening points (50, 52, 30, 32, 32')
• wherein at least one fastening point of the first (40) of the two securing straps (40, 42) is a sliding point (50) which uses an oblong hole (41), and
• wherein the longitudinal extent of the oblong hole defines an axis (A) that is tilted at an angle γ between 5° and 20° with respect to the vertical axis (V).

2. The fastening arrangement (20) according to claims 1, **characterized in that** a securing strap (40, 42) is formed as a flat, substantially T- (12), double-T (12"), L- (12') or I-shaped (11, 11') strap element.

3. The fastening arrangement (20) according to claims 1 - 2, **characterized in that** the first and second securing straps (40, 42) are of the same type of strap element.

4. The fastening arrangement (20) according to claims 1 - 3, **characterized in that** the straps are formed from steel, from aluminum or from high-strength plastics, in particular fiber-reinforced plastics.

5. The fastening arrangement (20) according to claims 1 - 4, **characterized in that** the adhesive component comprises at least one or a combination of the following elements: single or multi-component adhesive, double-sided adhesive tape, double-sided foam adhesive tape, double-sided adhesive dots, or double-sided adhesive strips.

6. The fastening arrangement (20) according to claims 1 - 5, **characterized in that** the substructure (22, 22') comprises vertically arranged profiles.

7. The fastening arrangement (20) according to claim 6, **characterized in that** the profiles are configured as L, U or flat profiles made of metal.

8. A method of fastening facade panel elements (25) to a substructure (22, 22'), comprising the following steps:
a) providing a substructure (22, 22'),
b) providing at least one facade panel element (25),
c) preparing the substructure (22, 22') and the facade panel element for fastening,
d) attaching at least two securing straps to the facade element (25),
e) applying at least one adhesive component onto the facade element (25) or the substructure (22, 22'),
f) aligning and attaching the facade element to the substructure (20, 22'),
g) fastening the two securing straps to the substructure, wherein a fastening point of the first (40) of the two securing straps (40, 42) is a sliding point (50) which uses an oblong hole (41), the longitudinal extent of which defines an axis (A) which, after the fastening of the sliding point, is tilted at an angle γ of between 5° and 20° with respect to the vertical axis (V).

9. The method according to claim 8, **characterized in that** step c) comprises:
- checking and, if necessary, cleaning at least partial surfaces of the substructure (22, 22') and/or the facade panel element (25),
- if necessary, applying an adhesion promoter/ primer.

10. The method according to claims 8 - 9, **characterized in that** the attaching in step d) comprises adhering, screwing, riveting, clamping the securing straps.

11. The method according to claims 8 - 10, **characterized in that** the applying of an adhesive component in step e) comprises at least one of the following steps: applying a single- or multi-component adhesive, attaching a double-sided adhesive tape, attaching a double-sided foam adhesive tape, double-side adhesive dots, or double-sided adhesive strips.

12. The method according to claims 8 - 11, **characterized in that** the steps or sub-steps c) and d) are carried out in a different sequence.

13. The method according to claims 8 - 12, **characterized in that** the fastening in step g) comprises screwing or riveting.

14. The method according to claims 8 - 13, **characterized in that** the aligning and attaching of the facade panel element (25) according to step f) comprises:
- positioning the facade panel element horizontally and vertically according to a laying plan,
- bringing the surfaces to be bonded or the applied adhesive components into contact with each other,
- if necessary, fine adjustment of the alignment of the facade panel element (25),
- if necessary, attaching clamps, cramps, or clips for securing the aligned panel element (25).

15. The method according to claims 8 - 14, **characterized in that** prior to fastening a further facade panel element according to steps a) to g), attaching of one or more spacer gauges (60), which support the alignment and attachment of the further facade panel element (25), is carried out.

## Revendications

1. Système de fixation (20) pour l'ancrage d'éléments de dalle de façade (25) comprenant une substructure (22, 22') sur une enveloppe de gros-œuvre et une pluralité d'éléments de dalle de façade (25), sachant que la fixation comprend, entre la substructure (22, 22') et les éléments de dalle de façade (25), un composant adhésif ainsi qu'un composant de consolidation mécanique, **caractérisé en ce qu'**
• il y a au moins deux pattes de sécurité (40, 42) en tant que composants de consolidation mécaniques par élément de dalle de façade (25) avec au moins respectivement deux points de fixation (50, 52, 30, 32, 32'),
• sachant qu'au moins un point de fixation de la première (40) des deux pattes de sécurité (40, 42) est un point de glissement (50), qui utilise un trou oblong (41), et
• sachant que l'extension longitudinale du trou oblong définit un axe (A), qui est basculé d'un angle γ entre 5° et 20° par rapport à l'axe vertical (V).

2. Système de fixation (20) selon la revendication 1, **caractérisé en ce qu'**une patte de sécurité (40, 42) est constituée sous la forme d'un élément de patte plat, pour l'essentiel en forme de T (12) de double T (12"), de L (12') ou de I (11, 11').

3. Système de fixation (20) selon les revendications 1 - 2, **caractérisé en ce que** la première et la deuxième patte de sécurité (40, 42) sont du même type qu'un élément de patte.

4. Système de fixation (20) selon les revendications 1 - 3, **caractérisé en ce que** les pattes sont formées en acier, en aluminium ou une matière plastique hautement résistante, en particulier une matière plastique renforcée aux fibres.

5. Système de fixation (20) selon les revendications 1 - 4, **caractérisé en ce que** le composant adhésif comprend au moins un élément ou une combinaison des éléments suivants : adhésif à un ou plusieurs composants, bande adhésive biface, bande adhésive en mousse biface, points ou rubans adhésifs bifaces.

6. Système de fixation (20) selon les revendications 1 - 5, **caractérisé en ce que** la substructure (22, 22') comprend des profilés disposés verticalement.

7. Système de fixation (20) selon la revendication 6, **caractérisé en ce que** les profilés sont exécutés en métal sous la forme de profilés en L, U ou plats.

8. Procédé pour la fixation d'éléments de dalle de façade (25) sur une substructure (22, 22') avec les étapes suivantes :
a) préparation d'une substructure (22, 22'),
b) préparation d'au moins un élément de dalle de façade (25)
c) préparation préalable de la substructure (22, 22') et de l'élément de dalle de façade pour la fixation,
d) montage d'au moins deux pattes de sécurité sur l'élément de façade (25),
e) application d'au moins un composant adhésif sur l'élément de façade (25) ou la substructure (22, 22'),
f) orientation et montage de l'élément de façade sur la substructure (20, 22'),
g) fixation des deux pattes de sécurité à la substructure, sachant qu'un point de fixation de la première (40) des deux pattes de sécurité (40, 42) est un point de glissement (50), qui utilise un trou oblong (41) dont l'extension longitudinale définit un axe (A), qui est basculé d'un angle γ entre 5° et 20° par rapport à l'axe vertical (V) après fixation du point de glissement.

9. Procédé selon la revendication 8, **caractérisé en ce que** l'étape c) comprend :
- contrôle et si nécessaire, nettoyage d'au moins des parties de surface de la substructure (22, 22') et/ou de l'élément de dalle de façade (25),
- application, si nécessaire, d'un agent d'adhérence/apprêt.

10. Procédé selon les revendications 8 - 9, **caractérisé en ce que** le montage dans l'étape d) comprend un collage, un vissage, un rivetage, un agrafage des pattes de sécurité.

11. Procédé selon les revendications 8 - 10, **caractérisé en ce que** l'application d'un composant adhésif dans l'étape e) comprend au moins une des étapes suivantes : application d'un adhésif à un ou plusieurs composants, montage d'une bande adhésive biface, montage d'une bande adhésive en mousse biface, de points ou rubans adhésifs bifaces.

12. Procédé selon les revendications 8 - 11, **caractérisé en ce que** les étapes ou parties d'étape de c) et d) sont exécutées dans un ordre modifié.

13. Procédé selon les revendications 8 - 12, **caractérisé en ce que** la fixation à l'étape g) comprend un vissage ou un rivetage.

14. Procédé selon les revendications 8 - 13, **caractérisé en ce que** l'orientation et le montage de l'élément de façade (25) après l'étape f), comprend :
- le positionnement de l'élément de dalle de façade horizontalement et verticalement conformément au plan de pose,
- la mise en contact des surfaces à coller ou des composants adhésifs appliqués,
- ajustage précis, si nécessaire, de l'orientation de l'élément de dalle de façade (25),
- montage, si nécessaire, de serrages, de pinces ou d'agrafes pour la consolidation de l'élément de dalle fixe orienté (25).

15. Procédé selon les revendications 8 - 14, **caractérisé en ce qu'**avant la fixation d'un autre élément de dalle de façade selon les étapes a) à g), il est procédé à un montage d'un ou de plusieurs gabarits d'écartement (60), lesquels aident à l'orientation et au montage de l'autre élément de dalle de façade (25).
